# EUROPEAN PATENT APPLICATION

(11) **EP 4 721 914 A1**
(43) Date of publication of application: **08.04.2026**
(21) Application number: 24204848.6
(22) Date of filing: 04.10.2024
(51) Int. Cl.: B23Q 3/155, B23Q 3/157

(54) **TOOL CLAMPING MECHANISM OF MACHINING APPARATUS**

(71) Applicant: Sanjet International Co., Ltd., Daya Dist. Taichung City 428 (TW)
(72) Inventor: CHANG, CHING-SAN, 428 Taichung City (TW)
(74) Representative: Cabinet Chaillot

(57) **Abstract**

A tool clamping mechanism (100) of a machining apparatus is adapted to clamp a tool holder (200) and includes a base (20), a control rod (30), and two grip arms (50). The grip arms (50) are pivotally connected to the base (20) and are capable of clamping and opening. The control rod (30) is movable between a first position (P1) and a second position (P2) along an axial line (L). When the control rod (30) is located at the first position (P1), the grip arms (50) could stably clamp the tool holder (200). When the control rod (30) is located at the second position (P2), the control rod (30) drives the grip arms (50) to pivot and open to easily release the tool holder (200).

## Description

### BACKGROUND OF THE INVENTION

### Technical Field

The present invention relates generally to placement of tools of a machining apparatus, and more particularly to a tool clamping mechanism of a machining apparatus.

### Description of Related Art

In order to achieve automatic machining, a machining apparatus typically includes a tool changing mechanism and a tool magazine. The tool magazine is provided with a socket or a tool pot that could store a tool holder, wherein the tool holder is engaged with a tool for machining. In order to properly store the tool holder and prevent the tool holder from being detached improperly due to placement of the tool holder or during changing a position of the tool holder, the socket is provided with a sleeving hole for the tool holder to insert therein, and the tool holder is stabilized through a fastening mechanism. The tool pot is provided with two grip arms, which could correspondingly clamp, for clamping the tool holder, wherein a spring is engaged between the two grip arms to prevent the two grip arms from opening easily, thereby stabilizing the tool holder.

Although the socket or the tool pot could stabilize the tool holder, the socket or the tool pot still has room for improvement. Taking the tool pot as an example, the two grip arms of the tool pot are pivotally connected to a base, and the spring is disposed between the two grip arms; an elastic force of the spring keeps an end of the two grip arms clamping. To ensure that the two grip arms could effectively and stably clamp the tool holder, a spring with a great elastic modulus is typically used to ensure a clamping force. However, such condition makes opening the two grip arms difficult. As a result, a force that is greater than the elastic force is required to open the two grip arms during placing or taking out the tool holder, which is difficult for the tool holder to enter or exit a clamping space of the two grip arms and might cause the tool holder from being detached improperly.

### BRIEF SUMMARY OF THE INVENTION

In view of the above, the primary objective of the present invention is to provide a tool clamping mechanism of a machining apparatus, which could stably clamp a tool holder and release the tool holder in an effort-saving manner.

The present invention provides a tool clamping mechanism of a machining apparatus. The tool clamping mechanism is adapted to clamp a tool holder. The tool clamping mechanism includes a base, a control rod, and two grip arms. The base has an axial hole. the control rod passes through the axial hole and is movable between a first position and a second position along an axial line. An end of the control rod has a coupling portion. The two grip arms are pivotally connected to the base and is capable of clamping and opening. Each of the two grip arms has a coupled portion. When the control rod is located at the first position, the two grip arms clamp the tool holder. When the control rod is located at the second position, the coupling portion of the control rod is operatively coupled with the two coupled portions of the two grip arms to drive the two grip arms to pivot and open to release the tool holder.

With the aforementioned design, the control rod is movable between the first position and the second position, and the two grip arms are driven to open or clamp while the control rod moves, so that the tool holder could be released in an effort-saving manner or could be stably clamped.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a perspective view of the tool clamping mechanism of the machining apparatus and the tool holder according to an embodiment of the present invention;
FIG. 2 is a perspective view of the tool clamping mechanism in FIG. 1 seen from another perspective;
FIG. 3 is a partially exploded view of the tool clamping mechanism of the machining apparatus according to the embodiment of the present invention;
FIG. 4 is an exploded view of a part of the tool clamping mechanism of the machining apparatus in FIG. 3;
FIG. 5 is a top view of a part of the tool clamping mechanism of the machining apparatus in FIG. 3;
FIG. 6 is a sectional schematic view showing that the tool clamping mechanism of the machining apparatus is at the clamped state;
FIG. 7 is a top view showing a part of the tool clamping mechanism in FIG. 6;
FIG. 8 is a schematic view showing the angle between the two grip arms when the tool clamping mechanism of the machining apparatus is at the clamped state;
FIG. 9 is a sectional schematic view showing that the tool clamping mechanism of the machining apparatus is at the opened state; and
FIG. 10 is a schematic view showing the angle between the two grip arms when the tool clamping mechanism of the machining apparatus is at the opened state.

### DETAILED DESCRIPTION OF THE INVENTION

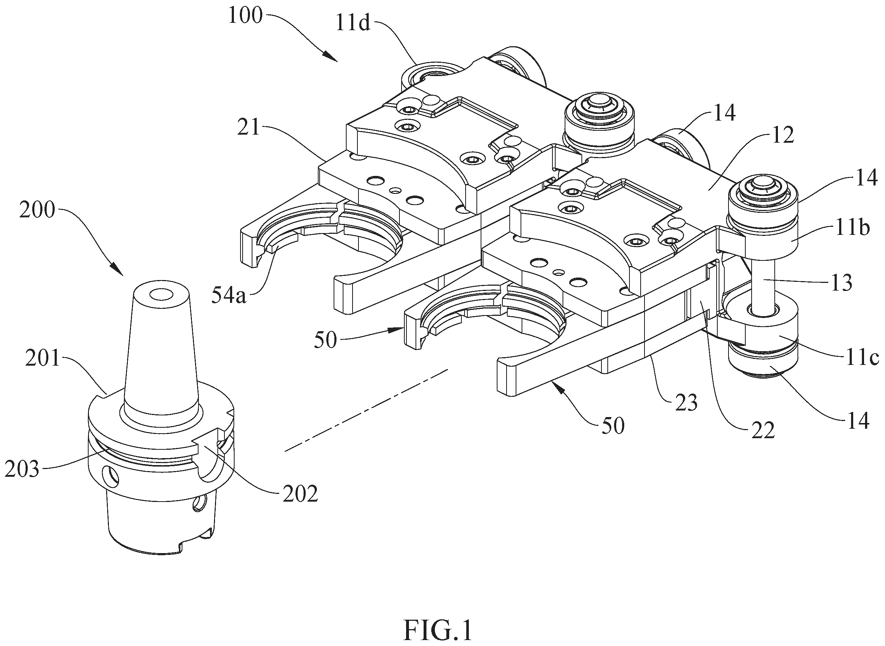

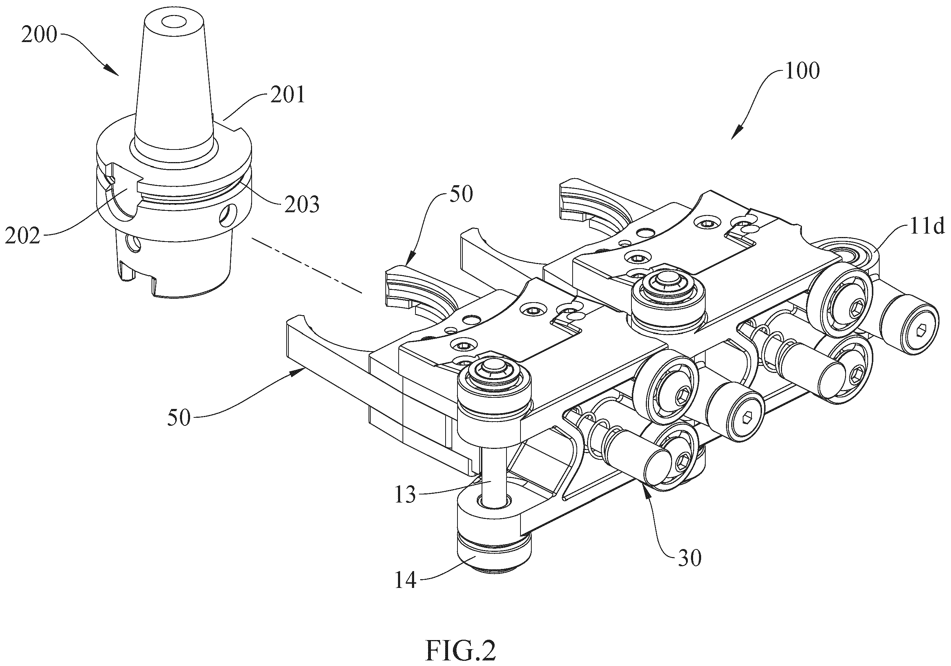

A tool clamping mechanism 100 of a machining apparatus according to an embodiment of the present invention is illustrated in FIG. 1 to FIG. 3 and is adapted to clamp a tool holder 200. An annular peripheral surface of the tool holder 200 has two positioned grooves 201, 202 having two different widths. The tool clamping mechanism 100 includes a chain seat 10, a base 20, a control rod 30, a resilience member 40, and two grip arms 50. The structure of each of the components will be explained first, followed by the assembly and the operation of the components.

The chain seat 10 is a L-shaped main body that is formed by connecting a vertical block 11 and a horizontal block 12. The vertical block 11 has a through hole 11a. A connecting portion and a connected portion are provided on two sides of the vertical block 11, respectively. The connecting portion is constituted of a top pivot ear 11b and a bottom pivot ear 11c, wherein the top pivot ear 11b and the bottom pivot ear 11c are spaced. The connected portion is a protruding block 11d. When two chain seats 10 are disposed adjacently, the protruding block 11d of one of the chain seats 10 is located between the top pivot ear 11b and the bottom pivot ear 11c; a shaft pin 13 passes through the top pivot ear 11b, the protruding block 11d, and the bottom pivot ear 11c in sequence, so that the two adjacent chain seats 10 are pivotally connected to each other; a chain (not shown) could be formed by connecting a plurality of chain seats 10. Moreover, the chain seat 10 is engaged with a plurality of rollers 14, wherein the rollers 14 could cooperate with a rail (not shown), so that the chain is movable along a fixed route. The horizontal block 12 has two aligning holes 12a and four counterbores 12b.

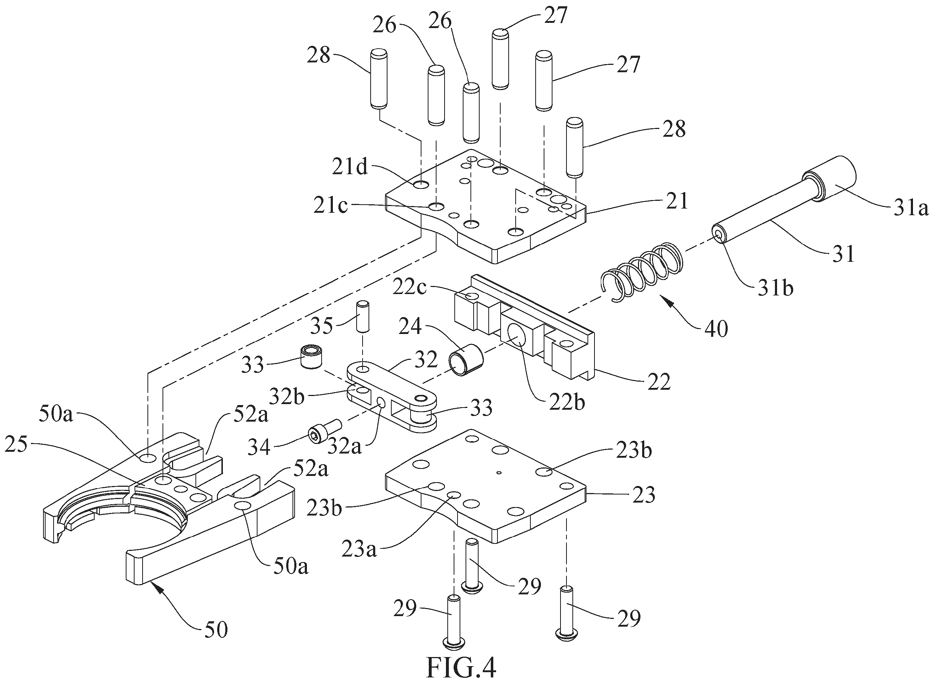

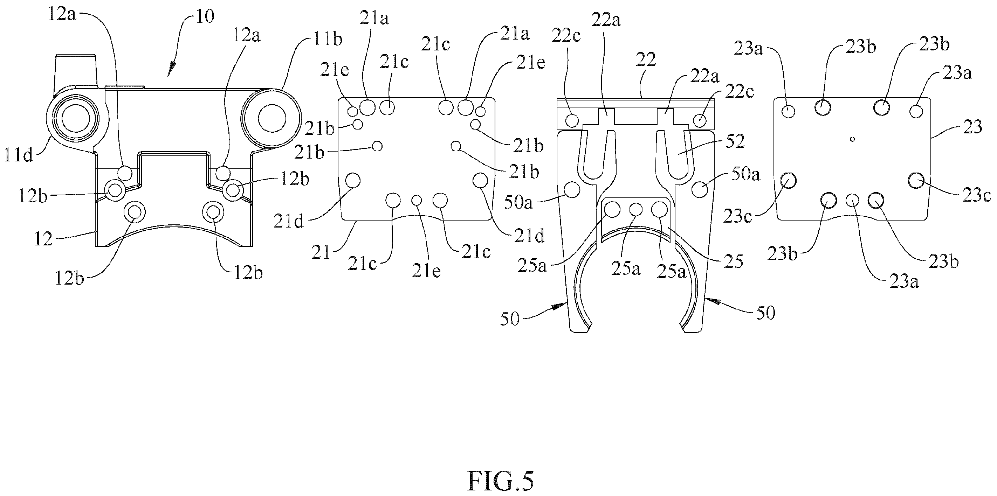

The base 20 is detachably engaged with the chain seat 10. Referring to FIG. 4 and FIG. 5, in the current embodiment, the base 20 includes a top clamping plate 21, a fixing block 22, and a bottom clamping plate 23. The top clamping plate 21 has two positioning holes 21a, four first threaded holes 21b, four top through holes 21c, two shaft holes 21d, and three second threaded holes 21e. The fixing block 22 has two recesses 22a, an axial hole 22b, and two lateral through holes 22c. The axial hole 22b is located between the two recesses 22a and a wear resistant sleeve 24 is provided in the axial hole 22b. The two lateral through holes 22c are respectively located on an outside of the two recesses 22a. The bottom clamping plate 23 has three counterbores 23a, four bottom through holes 23b, and two shaft holes 23c. Moreover, the base 20 further includes a restricting block 25. The restricting block 25 has three middle through holes 25a and a curved protrusion 25b. It is worth mentioning that the number of the aforementioned holes of the aforementioned components is not limited to the embodiment and could be increased or decreased according to the actual installation requirements.

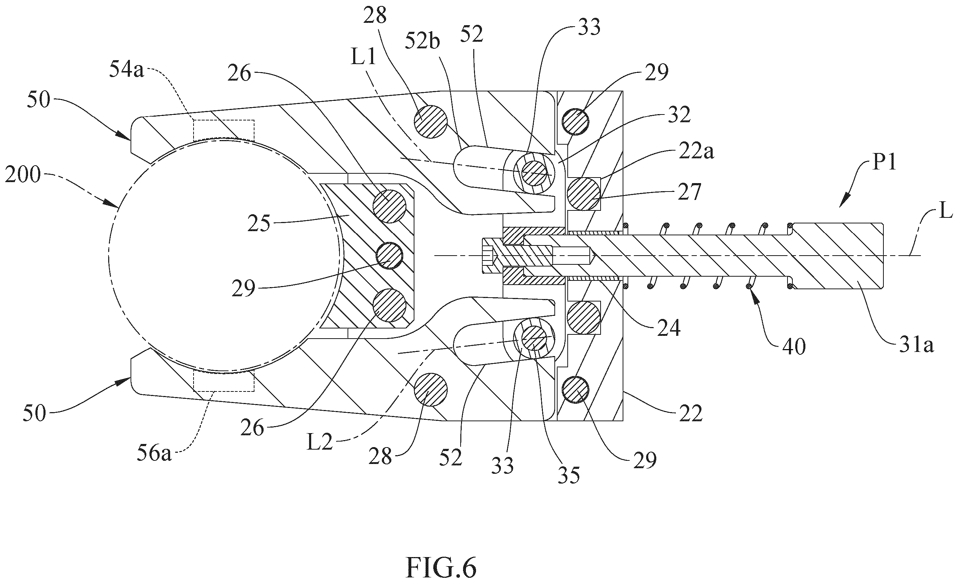

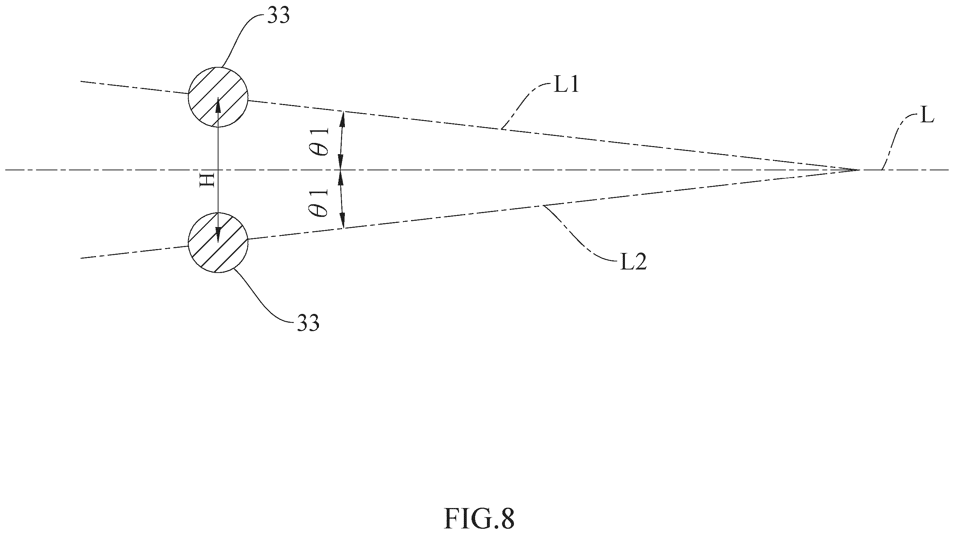

The control rod 30 includes a rod body 31 and a coupling portion disposed on an end of the rod body 31. Referring to FIG 4 and FIG 6, in the current embodiment, another end of the rod body 31 has a head 31a, and the end of the rod body 31 is axially provided with a threaded hole 31b. The rod body 31 passes through the wear resistant sleeve 24 in the axial hole 22b, thereby reducing wear and tear. The coupling portion includes a connecting block 32 and two rollers 33. The connecting block 32 has a through hole 32a. A bolt 34 passes through the through hole 32a of the connecting block 32 to screw into the threaded hole 31b of the rod body 31, so that the connecting block 32 is fixedly connected to the rod body 31. In this way, the control rod 30 is engaged with the fixing block 22 in a movable manner along an axial line L. Moreover, the connecting block 32 has two lateral grooves 32b respectively provided on two sides of the through hole 32a of the connecting block 32. The two rollers 33 of the coupling portion are rotatably disposed in the two lateral grooves 32b through two pins 35, wherein a distance between two centers of the two rollers 33 of the coupling portion is a fixed distance H (shown in FIG. 8).

In the current embodiment, the resilience member 40 is a spring as an example. The resilience member 40 fits around the rod body 31 before the rod body 31 passes through the axial hole 22b. After the rod body 31 is fixedly connected to the connecting block 32, two ends of the resilience member 40 respectively abut against the fixing block 22 and the head 31a. The resilience member 40 provides a pushing force to the control rod 30, thereby keeping the control rod 30 moving outward.

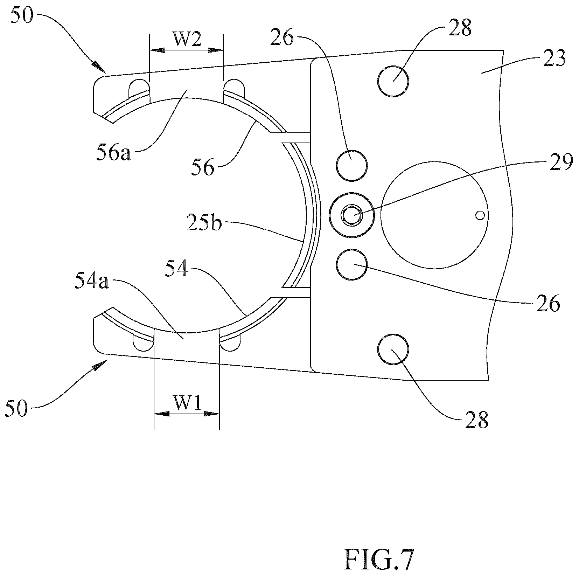

The two grip arms 50 are pivotally connected to the base 20 and could clamp or open relatively. In the current embodiment, each of the two grip arms 50 has a pivot hole 50a, wherein two sides of the pivot hole 50a respectively form a coupled portion and a clamping portion. Referring to FIG 6 and FIG. 7, the coupled portion of each of the grip arms 50 is constituted of a groove 52, wherein the groove 52 has an opening 52a and a closed end 52b. The two clamping portions of the two grip arms 50 have two curved inner edges 54, 56, respectively. The curved inner edge 54 of one of the two grip arms 50 has a first positioning block 54a. The curved inner edge 56 of the other grip arm 50 has a second positioning block 56a. The first positioning block 54a has a first width W1. The second positioning block 56a has a second width W2. The first width W1 is less than the second width W2.

The structure of each of the components of the tool clamping mechanism 100 according to the embodiment of the present invention is explained as above. The assembly of the tool clamping mechanism 100 is explained in the following.

Referring to FIG. 4 to FIG 6, firstly, the restricting block 25, the two grip arms 50, and the fixing block 22 that has been assembled with the control rod 30 are placed between the top clamping plate 21 and the bottom clamping plate 23. Afterwards, two positioning pins 26 pass through two of the top through holes 21c, two of the middle through holes 25a, and two of the bottom through holes 23b that are corresponding, and another two positioning pins 27 pass through the other top through holes 21c, the recesses 22a, and the other bottom through holes 23b that are corresponding. Two pivot shafts 28 pass through the shaft holes 21d of the top clamping plate 21, the pivot holes 50a, and the shaft holes 23c of the bottom clamping plate 23 that are corresponding. Three bolts 29 correspondingly pass through the counterbores 23a of the bottom clamping plate 23 from bottom up. One of the bolts 29 firstly passes through one of the middle through holes 25a that is not passed by the two positioning pins 26; then the bolt 29 is screwed into one of the second threaded holes 21e. The other two bolts 29 respectively pass through the two lateral through holes 22c to screw into the other two second threaded holes 21e. In this way, the top clamping plate 21 and the bottom clamping plate 23 are fixed on two sides of the fixing block 22, and an operating space is formed between the top clamping plate 21 and the bottom clamping plate 23. At the same time, the restricting block 25 is fixed between the top clamping plate 21 and the bottom clamping plate 23. The coupling portion of the control rod 30 and a part of the two grip arms 50 having the coupled portions is located in the operating space. The two rollers 33 of the coupling portion are respectively located in the two grooves 52 of the two grip arms 50.

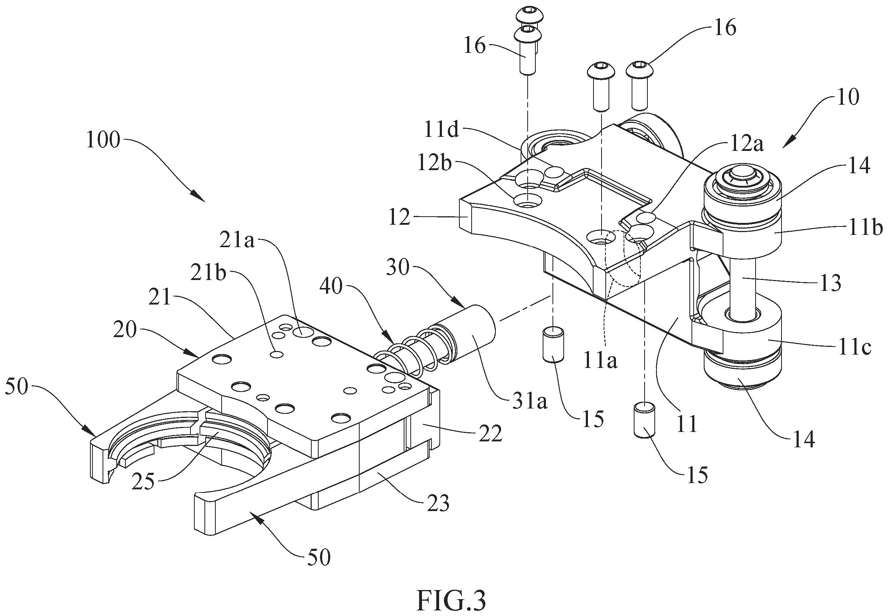

Referring to FIG. 3 and FIG. 5, the another end of the control rod 30 having the head 31a passes through the through hole 11a of the chain seat 10. At the same time, the horizontal block 12 of the chain seat 10 abuts against the top clamping plate 21. Then, two ends of two positioning pins 15 correspondingly pass through the two aligning holes 12a and the positioning holes 21a of the top clamping plate 21. Afterwards, four bolts 16 pass through the counterbores 12b of the horizontal block 12 to correspondingly screw into the first threaded holes 21b. In this way, the tool clamping mechanism 100 is assembled. At that time, the head 31a and the coupling portion of the control rod 30 are respectively located on two sides of the chain seat 10.

How the tool clamping mechanism 100 is used to clamp or release the tool holder 200 is explained in the following.

FIG. 6 shows that the two grip arms 50 of the tool clamping mechanism 100 are at a clamped state. At that time, the first positioning block 54a of one of the grip arms 50 fits into the positioned groove 201 of the tool holder 200, the second positioning block 56a of the other grip arm 50 fits into the positioned groove 202 of the tool holder 200, and the curved protrusion 25b of the restricting block 25 fits into an annular groove 203 of the tool holder 200, so that the tool holder 200 could be clamped without rotating freely. At the same time, the control rod 30 is pushed by the resilience member 40 to keep moving outward, thereby driving the connecting block 32 to abut against the fixing block 22; the two rollers 33 of the coupling portion are located in the two grooves 52 and are located close to the two openings 52a of the two grooves 52. At that time, the control rod 30 is defined as being at a first position P1; a first extension line L1 and a second extension line L2 are virtual, wherein the first extension line L1 passes through a center of one of the two grooves 52 and a center of one of the two rollers 33 of the coupling portion, and the second extension line L2 passes through a center of the other groove 52 and a center of the other roller 33 of the coupling portion. Referring to FIG. 8, the first extension line L1 and the second extension line L2 intersect to form an acute angle. The axial line L passes through an intersection of the first extension line L1 and the second extension line L2. When the control rod 30 is located at the first position P1, the axial line L divides the acute angle into two first half angles having the same degree. In the current embodiment, each of the first half angles is θ1 and 1°≤θ1≤10°; preferably, each of the first half angles θ1 is 6.5°.

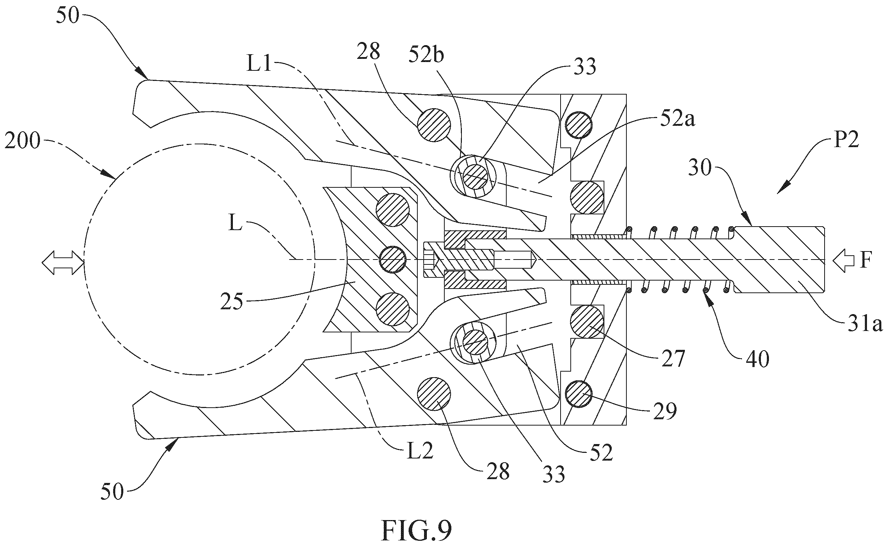

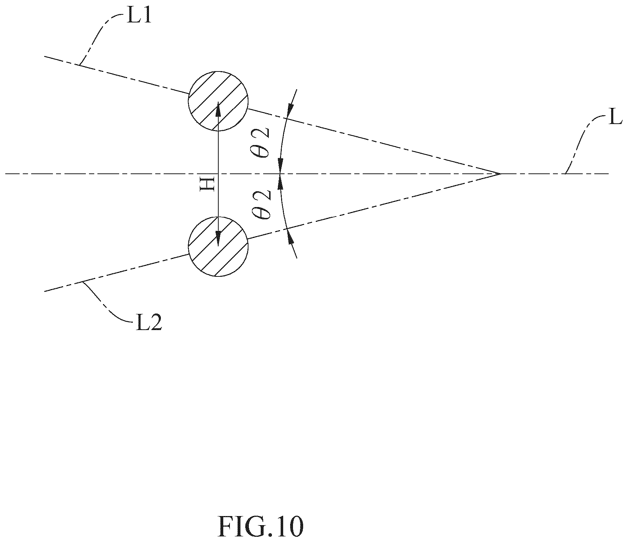

Referring to FIG. 9 and FIG. 10, when the tool holder 200 is about to be released for using, a force F is applied on the control rod 30 to pivot the two grip arms 50 for opening a clamping space. More specifically, the distance between the centers of the two rollers 33 of the coupling portion is fixed distance H, an initial position of the two rollers 33 of the coupling portion is close to the opening 52a of the two grooves 52, and each of the first half angle θ1 is 6.5°. Therefore, when the control rod 30 is pushed by the force F to move along the axial line L and to compress the resilience member 40 and the two rollers 33 of the coupling portion move towards the two closed ends 52b of the two grooves 52 along with the control rod 30, the two grip arms 50 could be easily driven to pivot outward around the two pivot shafts 28, thereby opening the clamping space. In this way, the tool holder 200 could be easily taken out for using. When the two grip arms 50 are completely opened, the control rod 30 at that time is located at a second position P2. At that time, the first extension line L1 passes through the center of one of the two rollers 33 of the coupling portion and the center of one of the two grooves 52 and the second extension line L2 passes through the center of the other roller 33 of the coupling portion and the center of the other groove 52; the angle formed between the first extension line L1 and the second extension line L2 is still an acute angle; the axial line L divides the acute angle into two second half angles having the same degree. The second half angle is greater than the first half angle. In the current embodiment, each of the second half angles is θ2 and 11°≤θ2≤20°; preferably, each of the second half angles θ2 is 14.54°.

The two grip arms 50 are indirectly influenced by the resilience member 40 to stably clamp the tool holder 200 with a great clamping force. For releasing the tool holder 200, the control rod 30 of the present invention is movable between the first position P1 and the second position P2 along the axial line L, and each of the first half angles θ1 is 6.5° when the two grip arms 50 are at the clamped state; each of the first half angles θ1 is similar to 0°, so that when the control rod 30 is moved from the first position P1 to the second position P2, the two grip arms 50 could be easily driven to pivot and to open the clamping space, thereby achieving the purpose of releasing the tool holder 200 in an effort-saving manner. In this sense, when each of the first half angles θ1 is smaller, the force F required for driving the two grip arms 50 to pivot is smaller. When the force F applied on the control rod 30 is removed, the resilience member 40 releases a resilience to push the control rod 30 to the first position P1, so that the two grip arms 50 restore to the clamped state for subsequent clamping.

In the embodiment, each of the first half angles θ1 ranges between 1° and 10°, and each of the second half angles θ2 ranges between 11° and 20°. However, as long as each of the first half angles θ1 is less than or equal to 45°, the two grip arms 50 could be driven to pivot; each of the first half angles θ1 is not limited to be between 1° and 10°. Moreover, each of the second half angles θ2 is greater than each of the first half angles θ1, so that an opening angle of each of the grip arms 50 pivoting outwards is not restricted by θ2 (ranging between 11° and 20°); for example, when each of the first half angles θ1 is 45°, the opening angle of each of the grip arms 50 pivoting outwards could be 90° or even 150°; the opening angle of each of the grip arms 50 pivoting outwards could be adjusted to meet different requirements.

In the embodiment, the tool clamping mechanism 100 includes the chain seat 10 for constituting the chain, so that the chain could be a part of a chain type tool magazine. However, in order to be applicable to different types of tool magazines, the tool clamping mechanism could be a unit mechanism having the base 20, the control rod 30, the resilience member 40, and the two grip arms 50 while the chain seat 10 is omitted. The unit mechanism could similarly achieve the purpose of releasing the tool holder in an effort-saving manner. The unit mechanism could be applied to an armless type tool magazine, but not limited thereto.

## Claims

1. A tool clamping mechanism (100) of a machining apparatus, adapted to clamp a tool holder (200), comprising:
a base (20) having an axial hole (22b);
a control rod (30) passing through the axial hole (22b) and being movable between a first position (P1) and a second position (P2) along an axial line (L), wherein an end of the control rod (30) has a coupling portion;
two grip arms (50) pivotally connected to the base (20) and being capable of clamping and opening, wherein each of the two grip arms (50) has a coupled portion;
wherein when the control rod (30) is located at the first position (P1), the two grip arms (50) clamp the tool holder (200); when the control rod (30) is located at the second position (P2), the coupling portion of the control rod (30) is operatively coupled with the two coupled portions of the two grip arms (50) to drive the two grip arms (50) to pivot and open to release the tool holder (200).

2. The tool clamping mechanism (100) as claimed in claim 1, wherein the coupling portion of the control rod (30) includes a connecting block (32) and two rollers (33); the connecting block (32) is connected to the control rod (30); the two rollers (33) are disposed on the connecting block (32) and are spaced by a fixed distance (H); each of the two grip arms (50) has a groove (52) constituting the coupled portion; the two rollers (33) are correspondingly located in the two grooves (52) of the two grip arms (50).

3. The tool clamping mechanism (100) as claimed in claim 2, wherein the groove (52) of one of the two grip arms (50) is disposed along a first extension line (L1) which is virtual; the groove (52) of the other grip arm (50) is disposed along a second extension line (L2) which is virtual; the first extension line (L1) and the second extension line (L2) intersect to form an acute angle; the axial line (L) passes through an intersection of the first extension line (L1) and the second extension line (L2); when the control rod (30) is located at the first position (P1), the axial line (L) divides the acute angle into two first half angles (θ1) having the same degree; when the control rod (30) is located at the second position (P2), the axial line (L) divides the acute angle into two second half angles (θ2) having the same degree; each of the two second half angles (θ2) is greater than each of the two first half angles (θ1).

4. The tool clamping mechanism (100) as claimed in claim 3, wherein each of the two first half angles (θ1) is less than or equal to 45°.

5. The tool clamping mechanism (100) as claimed in claim 2, wherein a threaded hole (31b) is axially provided on the control rod (30); the connecting block (32) has a through hole (32a); a bolt (34) passes through the through hole (32a) of the connecting block (32) to screw into the threaded hole (31b); the bolt (34) fixes the connecting block (32) on the control rod (30); two lateral grooves (32b) are respectively provided on two sides of the through hole (32a) of the connecting block (32); the two rollers (33) are respectively located in the two lateral grooves (32b) and are correspondingly located in the two grooves (52) of the two grip arms (50).

6. The tool clamping mechanism (100) as claimed in claim 1, including a chain seat (10), wherein the chain seat (10) has a connecting portion and a connected portion; the chain seat (10) is connected to a connected portion of a neighboring chain seat (10) through the connecting portion; the base (20) is detachably engaged with the chain seat (10); the control rod (30) has a head (31a) located on a side opposite to the coupling portion; the control rod (30) passes through a through hole (11a) of the chain seat (10), and the coupling portion and the head (31a) are located on two sides of the chain seat (10).

7. The tool clamping mechanism (100) as claimed in claim 1, wherein the base (20) includes a fixing block (22), a top clamping plate (21), and a bottom clamping plate (23); the fixing block (22) has the axial hole (22b); the top clamping plate (21) and the bottom clamping plate (23) are respectively fixed on two sides of the fixing block (22); an operating space is formed between the top clamping plate (21) and the bottom clamping plate (23); a part of each of the two grip arms (50) having the coupled portion is located in the operating space; the two grip arms (50) are pivotally connected to the base (20) through two pivot shafts (28) passing through the top clamping plate (21) and the bottom clamping plate (23).

8. The tool clamping mechanism (100) as claimed in claim 1, wherein an inner edge of one of the two grip arms (50) has a first positioning block (54a); an inner edge of the other grip arm (50) has a second positioning block (56a); the first positioning block (54a) has a first width (W1); the second positioning block (56a) has a second width (W2); the first width (W1) is less than the second width (W2).

9. The tool clamping mechanism (100) as claimed in claim 1, including a resilience member (40), wherein the resilience member (40) provides a pushing force to the control rod (30), so that the control rod (30) keeps moving towards the first position (P1).

10. The tool clamping mechanism (100) as claimed in claim 9, wherein the control rod (30) has a head (31a) located on a side opposite to the coupling portion; the resilience member (40) includes a spring; the spring fits around the control rod (30); an end of the spring abuts against the base (20); another end of the spring abuts against the head (3 1a) of the control rod (30).

## Amended claims

### Amended claims in accordance with Rule 137(2) EPC.

1. A tool clamping mechanism (100) of a machining apparatus, adapted to clamp a tool holder (200), comprising:
a base (20) having an axial hole (22b);
a control rod (30) passing through the axial hole (22b) and being movable between a first position (P1) and a second position (P2) along an axial line (L), wherein an end of the control rod (30) has a coupling portion;
two grip arms (50) pivotally connected to the base (20) and being capable of clamping and opening, wherein each of the two grip arms (50) has a coupled portion;
wherein when the control rod (30) is located at the first position (P1), the two grip arms (50) clamp the tool holder (200); when the control rod (30) is located at the second position (P2), the coupling portion of the control rod (30) is operatively coupled with the two coupled portions of the two grip arms (50) to drive the two grip arms (50) to pivot and open to release the tool holder (200),
**characterized in that** the coupling portion of the control rod (30) includes a connecting block (32) and two rollers (33); the connecting block (32) is connected to the control rod (30); the two rollers (33) are disposed on the connecting block (32) and are spaced by a fixed distance (H); each of the two grip arms (50) has a groove (52) constituting the coupled portion; the two rollers (33) are correspondingly located in the two grooves (52) of the two grip arms (50).

2. The tool clamping mechanism (100) as claimed in claim 1, wherein the groove (52) of one of the two grip arms (50) is disposed along a first extension line (L1) which is virtual; the groove (52) of the other grip arm (50) is disposed along a second extension line (L2) which is virtual; the first extension line (L1) and the second extension line (L2) intersect to form an acute angle; the axial line (L) passes through an intersection of the first extension line (L1) and the second extension line (L2); when the control rod (30) is located at the first position (P1), the axial line (L) divides the acute angle into two first half angles (θ1) having the same degree; when the control rod (30) is located at the second position (P2), the axial line (L) divides the acute angle into two second half angles (θ2) having the same degree; each of the two second half angles (θ2) is greater than each of the two first half angles (θ1).

3. The tool clamping mechanism (100) as claimed in claim 2, wherein each of the two first half angles (θ1) is less than or equal to 45°.

4. The tool clamping mechanism (100) as claimed in claim 1, wherein a threaded hole (31b) is axially provided on the control rod (30); the connecting block (32) has a through hole (32a); a bolt (34) passes through the through hole (32a) of the connecting block (32) to screw into the threaded hole (31b); the bolt (34) fixes the connecting block (32) on the control rod (30); two lateral grooves (32b) are respectively provided on two sides of the through hole (32a) of the connecting block (32); the two rollers (33) are respectively located in the two lateral grooves (32b) and are correspondingly located in the two grooves (52) of the two grip arms (50).

5. The tool clamping mechanism (100) as claimed in claim 1, including a chain seat (10), wherein the chain seat (10) has a connecting portion and a connected portion; the chain seat (10) is connected to a connected portion of a neighboring chain seat (10) through the connecting portion; the base (20) is detachably engaged with the chain seat (10); the control rod (30) has a head (31a) located on a side opposite to the coupling portion; the control rod (30) passes through a through hole (11a) of the chain seat (10), and the coupling portion and the head (31a) are located on two sides of the chain seat (10).

6. The tool clamping mechanism (100) as claimed in claim 1, wherein the base (20) includes a fixing block (22), a top clamping plate (21), and a bottom clamping plate (23); the fixing block (22) has the axial hole (22b); the top clamping plate (21) and the bottom clamping plate (23) are respectively fixed on two sides of the fixing block (22); an operating space is formed between the top clamping plate (21) and the bottom clamping plate (23); a part of each of the two grip arms (50) having the coupled portion is located in the operating space; the two grip arms (50) are pivotally connected to the base (20) through two pivot shafts (28) passing through the top clamping plate (21) and the bottom clamping plate (23).

7. The tool clamping mechanism (100) as claimed in claim 1, wherein an inner edge of one of the two grip arms (50) has a first positioning block (54a); an inner edge of the other grip arm (50) has a second positioning block (56a); the first positioning block (54a) has a first width (W1); the second positioning block (56a) has a second width (W2); the first width (W1) is less than the second width (W2).

8. The tool clamping mechanism (100) as claimed in claim 1, including a resilience member (40), wherein the resilience member (40) provides a pushing force to the control rod (30), so that the control rod (30) keeps moving towards the first position (P1).

9. The tool clamping mechanism (100) as claimed in claim 8, wherein the control rod (30) has a head (31a) located on a side opposite to the coupling portion; the resilience member (40) includes a spring; the spring fits around the control rod (30); an end of the spring abuts against the base (20); another end of the spring abuts against the head (31a) of the control rod (30).
